# EUROPEAN PATENT APPLICATION

(11) **EP 4 704 289 A1**
(43) Date of publication of application: **04.03.2026**
(21) Application number: 24197699.2
(22) Date of filing: 30.08.2024
(51) Int. Cl.: H02J 3/38, H02J 3/46, H02J 3/48, H02J 13/00

(54) **ENHANCED ZONAL AUTONOMOUS CONTROL FOR LOAD MANAGEMENT OF GRID NETWORKS**

(71) Applicant: GE Vernova Technology GmbH, 5400 Baden (CH)
(72) Inventor: HUA, Yi, Montpellier (FR); BAGLEYBTER, Oleg, Edinburgh (GB); PAMULAPARTHY, Balakrishna, Hyderabad (IN); FOGGIA, Guillaume, Montpellier (FR)
(74) Representative: Rüger Abel Patentanwälte PartGmbB

(57) **Abstract**

Systems, methods, and devices for load sharing of grid networks using zonal autonomous control may include a method including receiving, by a sub-level load sharing instance of a grid network topology, link limits and asset data for assets connected to a bus of the grid network topology; sending, by the sub-level load sharing instance, the link limits and the asset data to an adjacent load sharing instance at a higher level than the sub-level in the grid network topology; receiving, by the sub-level load sharing instance, from the adjacent load sharing instance at the higher level, a command indicative of a link limit and a setpoint to be applied to at least one of the assets connected to the bus; and applying, by the sub-level load sharing instance, the link limit and the setpoint to the at least one of the assets connected to the bus.

## Description

### TECHNICAL FIELD

This disclosure generally relates to load balancing in grid networks, and more particularly to enhanced zonal autonomous control for grid networks.

### BACKGROUND

Grid network controls are increasingly being automated, and the number of assets connecting to a grid is increasing. Monitoring and controlling digital grid assets and is challenging. There is a need to improve load dispatching of grid networks with virtual assets.

### SUMMARY

A method for load sharing of grid networks using zonal autonomous control may include receiving, by a sub-level load sharing instance of a grid network topology, link limits and asset data for assets connected to a bus of the grid network topology; sending, by the sub-level load sharing instance, the link limits and the asset data to an adjacent load sharing instance at a higher level than the sub-level in the grid network topology; receiving, by the sub-level load sharing instance, from the adjacent load sharing instance at the higher level, a command indicative of a link limit and a setpoint to be applied to at least one of the assets connected to the bus; and applying, by the sub-level load sharing instance, the link limit and the setpoint to the at least one of the assets connected to the bus.

A system for load sharing of grid networks using zonal autonomous control may include a grid network topology including: first processing circuitry of a top-level load sharing instance in communication with first assets connected to a first bus of the grid network topology; and second processing circuitry of a sub-level load sharing instance in communication with second assets connected to a second bus of the grid topology network, wherein the first bus and the second bus are adjacent level buses in the grid topology network, wherein the second processing circuitry is configured to: receive link limits and asset data for the second assets; send the link limits and the asset data to the top-level load sharing instance; receive, from the top-level load sharing instance, a command indicative of a link limit and a setpoint to be applied to at least one of the second assets; and apply the link limit and the setpoint to the at least one of the second assets.

A computer-readable medium including instructions may, when executed by processing circuitry cause the processing circuitry to: receive, using a sub-level load sharing instance of a grid network topology, link limits and asset data for assets connected to a bus of the grid network topology; send, using the sub-level load sharing instance, the link limits and the asset data to an adjacent load sharing instance at a higher level than the sub-level in the grid network topology; receive, using the sub-level load sharing instance, from the adjacent load sharing instance at the higher level, a command indicative of a link limit and a setpoint to be applied to at least one of the assets connected to the bus; and apply, using the sub-level load sharing instance, the link limit and the setpoint to the at least one of the assets connected to the bus.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 shows an example topology with zonal autonomous control (ZAC) load sharing in accordance with one embodiment of the present disclosure.
FIG. 2 is a block diagram of example load sharing instances in the upstream and downstream directions in accordance with one embodiment of the present disclosure.
FIG. 3 shows an example flow of a process for virtual part-asset creation for ZAC load sharing in accordance with one embodiment of the present disclosure.
FIG. 4 shows an example flow of a process for ZAC load sharing in accordance with one embodiment of the present disclosure.
FIG. 5 shows an example flow of a process for link limit calculation for ZAC load sharing in accordance with one embodiment of the present disclosure.
FIG. 6 shows an example flow of a process for dispatch of valid assets for ZAC load sharing in accordance with one embodiment of the present disclosure.
FIG. 7 shows an example asset data and link gathering of a topology with ZAC load sharing in accordance with one embodiment of the present disclosure.
FIG. 8 shows an example command of the topology of FIG. 7 in accordance with one embodiment of the present disclosure.
FIG. 9 shows an example asset data and link gathering of a topology with ZAC load sharing in accordance with one embodiment of the present disclosure.
FIG. 10 shows an example command of the topology of FIG. 9 in accordance with one embodiment of the present disclosure.
FIG. 11 shows an example flow of a process for system initialization and load sharing instance synchronization for ZAC load sharing in accordance with one embodiment of the present disclosure.
FIG. 12 is a diagram illustrating an example of a computing system that may be used in implementing embodiments of the present disclosure.
FIG. 13 illustrates an example neural network, in accordance with one or more embodiments.

Certain implementations will now be described more fully below with reference to the accompanying drawings, in which various implementations and/or aspects are shown. However, various aspects may be implemented in many different forms and should not be construed as limited to the implementations set forth herein; rather, these implementations are provided so that this disclosure will be thorough and complete, and will fully convey the scope of the disclosure to those skilled in the art. Like numbers in the figures refer to like elements throughout. Hence, if a feature is used across several drawings, the number used to identify the feature in the drawing where the feature first appeared will be used in later drawings.

### DETAILED DESCRIPTION

Grid networks include assets such as power generating and power storing assets. In addition, intelligent control and communication assets are being added to grid networks as fleets. A new level of grid automation is being applied to improve power distribution infrastructure, satisfy increasing energy demand, and facilitate an increasing integration of renewable energy sources. Grid automation systems have been based on vendor-specific hardware platforms. Moving to vendor-agnostic hardware and software for grid management can improve scalability, flexibility, grid resilience, and grid reliability.

Zonal autonomous control (ZAC) allows users to split grid networks into autonomous sections (zones), allowing the zones to recover more quickly in the event of a disruption. The present disclosure leverages the concept of ZAC to improve load management using a non-iterative technique without depending on a network topology processor by creating virtual assets for smart dispatch, and allowing for handling of branch and/or link limits (also referred to as branch limits, e.g., thermal limits between links between network topology passes) with no constraints on load sharing application function blocks (AFBs).

In one or more embodiments, the enhanced techniques herein allow for faster dispatch of power load by creating upper-level and lower-level zones dynamically with virtual asset creation through hierarchical aggregation. No network topology processor is needed, and there is no constraint of handling only one link limit with a given load sharing AFB. The ability to run the enhanced solution as cloud-based or virtualization-based, and with machine learning for enhanced dispatch, improves the autonomy of the enhanced solution herein.

For example, a load sharing AFB may facilitate a dispatch of power in a grid network. An active power target estimation AFB may supervise points of interface (POIs). However, a key constraint is that one load sharing AFB may supervise only one link limit (e.g., one thermal limit for a link) for links between different passes of a network topology. Therefore, if there is a cable or transformer with thermal constraints, a dedicated load sharing AFB normally has to be dedicated to assets downstream from the cable or transformer. In one or more embodiments, the enhanced techniques herein allow for a load sharing AFB to deal with multiple link limits.

Network topologies can be complex, often with multiple branches and passes. Circuit breakers may be opened and closed, changing a network topology. Therefore, network configurations can be dynamic. In one or more embodiments, the enhanced techniques herein do not require a model to calculate the network topology to determine how to connect an asset to a centralized controller. Each pass of a network topology may use an AFB, so load distribution of any network topology may be managed.

In addition, renewable energy assets may experience intermittencies because there are times when they may not be constantly available. The enhanced techniques herein mitigate the intermittencies of renewable energy assets to ensure continuous dispatch of intermittent energy assets.

In one or more embodiments, one load sharing AFB may be assigned for each bus in a network topology. The mapping between assets and load sharing AFBs is fixed, significantly simplifying communications between physical devices (e.g., power gateways) containing lead sharing AFBs and asset controllers. Changes to a network topology may be replicated in the connectivity between individual bus load sharing AFBs, and a topology processor is not needed. A load sharing instance may be assigned to a pass of a network topology, and the load sharing instance may be split into 1-n downstream load sharing instances for parallel links in a given level of the network topology.

In one or more embodiments, a physical asset in a grid network may be split into virtual assets. A virtual asset is an aggregate of physical assets of a same priority for dispatching power up or down. The enhanced techniques herein limit the physical connections of a controller to a physical asset, so the virtualized assets are represented in an aggregated way to report from the bottom level (of the topology) upward. In particular, the physical asset is split into a dispatch up (upper part) priority and a dispatch down (lower part) priority (i.e., virtual assets up and down), as different physical assets in a topology may be prioritized differently when distributing power up or down a network. The upper part virtual assets of a network may be aggregated, and the low part virtual assets of the network may be aggregated. The aggregated assets at a given level of the topology may be provided up the topology to the next level. To control downstream assets, the upper level may calculate a setpoint for each instance, which may signal to the downstream assets whether they need to correct an operational parameter.

In one or more embodiments, link limit control at a branch of a network topology may be possible by limiting the dispatch range of virtual assets at the upper-level block. The upper level may observe a need of an application of link limit from a downstream link by link information updates the dispatch minimum and maximum of virtual assets accordingly, and therefore the branch link limit at the downstream may be fulfilled. It does not matter how the downstream assets are dispatched according to the priority in the upper level, as the importance is to have the exact sum of power to be dispatched downstream. The downstream AFB receiving the setpoint calculated at the upper level may dispatch assets according to their priorities up or down depending on the need for power up or down. In this manner, the upper level is unaware of how the lower level applies the setpoint.

In one or more embodiments, by splitting a physical asset into two virtual assets, a single physical asset may be assigned multiple different priorities. A "priority up" refers to a priority for dispatch correction in the "up" direction (i.e., for increasing power output from an initial operating power). A "priority down" refers to a priority for dispatch correction in the "down" direction (i.e., for decreasing power output from an initial operating power). For example, a thermal generation asset may have a lower priority up than a cheaper hydro generation asset because the thermal generation asset may be more expensive, so it may be desirable to power up the thermal generation asset later than powering up the hydro generation asset. To reduce fuel consumption, the thermal generation asset may be assigned a higher priority down than the hydro generation asset so that the thermal generation asset is powered down before the hydro generation asset. Priority up/down may be assigned based on how expensive the operation of the asset is (e.g., expensive assets first to go down and last to go up; cheaper assets second to go down and second to last to go up), how mobile the asset is (e.g., use first to curtail), and the like (e.g., "do not touch unless desperate" assets last to curtail, "do not touch unless desperate" assets under energy management control charging at night with a fixed basepoint).

In one or more embodiments, the power up and down priorities may be assigned to intermittent and non-intermittent assets. A non-intermittent asset may be split into a priority up and a priority down. An intermittent asset may be assigned to only a priority down. The up and down priorities may be grouped together based on their respective priorities. For example, the up priorities of the assets may be grouped together, and the down priorities of the assets may be grouped together. For a non-intermittent asset, the power range split for priority up and down may be as follows. A non-intermittent asset may apply a technical maximum power and a technical minimum power, and may split at a dispatch initial power. In this manner, the priority up for a non-intermittent asset is applied to an asset whose technical power is between the dispatch initial power and the technical maximum power, and the priority down for a non-intermittent asset is applied to an asset whose technical power is between the dispatch initial power and the technical minimum power. By splitting a non-intermittent physical asset into a priority up asset and a priority down asset down the middle (e.g., at the dispatch initial power), the total operational range of the asset is unchanged.

In one or more embodiments, for intermittent assets, no power dispatch up is possible, so the asset from the technical minimum to the technical maximum is assigned a priority down. The dispatch down minimum for an intermittent asset may be the technical minimum, and the dispatch down maximum may be equal to the capability of the intermittent asset. In this manner, the power range of the intermittent asset may be between the technical minimum to the capability (e.g., between the technical minimum and technical maximum of the asset).

In one or more embodiments, the downstream setpoints of a topology may be grouped by UID (identifier). All the setpoints of a same UID are added together to calculated a downstream setpoint for dispatch up a downstream setpoint for dispatch down. The dispatch up setpoints are limited to non-intermittent assets, while the dispatch up setpoints may include both intermittent and non-intermittent assets due to the way the assets are split using the technical minimum and maximum as described above.

In one or more embodiments, a lower level priority asset calculates the generation level limits depending on a user parameter, and sends to generation level limits to the upper level. An upper level priority asset identifies the virtual asset from the downstream, applies the generation limit to the dispatch limit of each virtual asset, and provides the setpoint target to the downstream assets to apply.

In one or more embodiments, because of the grouping of assets, a LS AFB functioning as an LS upstream instance may manage a reduced set of downstream assets. For example, when there are 128 physical assets (e.g., local assets physically connected to a bus) managed by a downstream instance, the downstream instance may group the assets into sixteen groups: eight priority up groups, eight priority down groups. The asset data for sixteen virtual assets may be provided upstream to the LS upstream instance. Therefore, the LS upstream instance may manage only sixteen assets instead of 128 assets. As a result, the enhanced techniques herein are infinitely scalable, regardless of how many levels and assets are added to a topology. Also, based on a command received from an above level, a LS instance may implement the dispatch of a same number of assets (e.g., 128 using the same example) without considering whether the assets are virtual or physical. A subroutine may select resulting setpoints for virtual assets and send the setpoints to corresponding sub-level LS instances as target commands. Setpoints for physical assets may be sent directly to those assets for implementation.

In one or more embodiments, a link limit may be configured in downstream load sharing locally. When this option is enabled, a recalculated power generation limit from the downstream may be sent upstream. The upstream load sharing may evaluate the link limit information from the downstream, and may communicate to the downstream the total setpoint target to be dispatched downstream. The downstream load sharing may dispatch the setpoint target using the priority up and down based on the dispatch direction. In this manner, the enhanced techniques herein are hierarchical and scalable in terms of the dispatch, and are feasible on a single device, unlike existing techniques.

In one or more embodiments, in the upstream, the dispatch initial value may be removed from a virtual asset dispatch minimum/maximum. All the virtual assets in the up or down priority may be grouped together. A virtual dispatch may use the limit as the target to determine the dispatch limit. Then, the dispatch initial value may be added back to the virtual asset dispatch minimum or maximum.

As a result, the enhanced techniques herein provide a hierarchical, multi-level distributed dispatch for load sharing by creating dynamic upper and lower-level load sharing block linkages for a given topology at each point of control (POC). The techniques herein are adaptive to the topology, meaning that they follow the topology automatically (e.g., multiple dynamic POI assignments and breaker states, dynamic linkage between individual buses and blocks, etc.). The techniques herein provide an ability to create virtual assets groups in downstream load sharing blocks, and a unified asset model applied to both physical assets (e.g., directly connected distributed energy resources) and virtual assets, with multiple physical assets aggregated by downstream load sharing AFBs having an assigned priority. The techniques may use a model-less, no-power flow analysis involved with intermittent assets (e.g., solar, wind, etc.) considered with priority for flexible dispatchable resources and power range split of virtual assets for effective dispatch. An optimal dispatch is achieved through dispatching priorities and weights without an optimization engine being required. An auto-consideration of cable/transformer link thermal limits in the hierarchical dispatch process may prevent violations, and the techniques may be autonomous and non-iterative. In addition, the techniques herein are scalable infinitely by adding new layers of load sharing blocks. A load sharing function may be scalable to run as a cloud-based solution with sensor data transferred from each bus, or a load sharing function may run in a virtualization platform with containers. An AI-based learning of distributed dispatches at each PC may provide an autonomous and adaptive solution during a present interval and a next operating intervals.

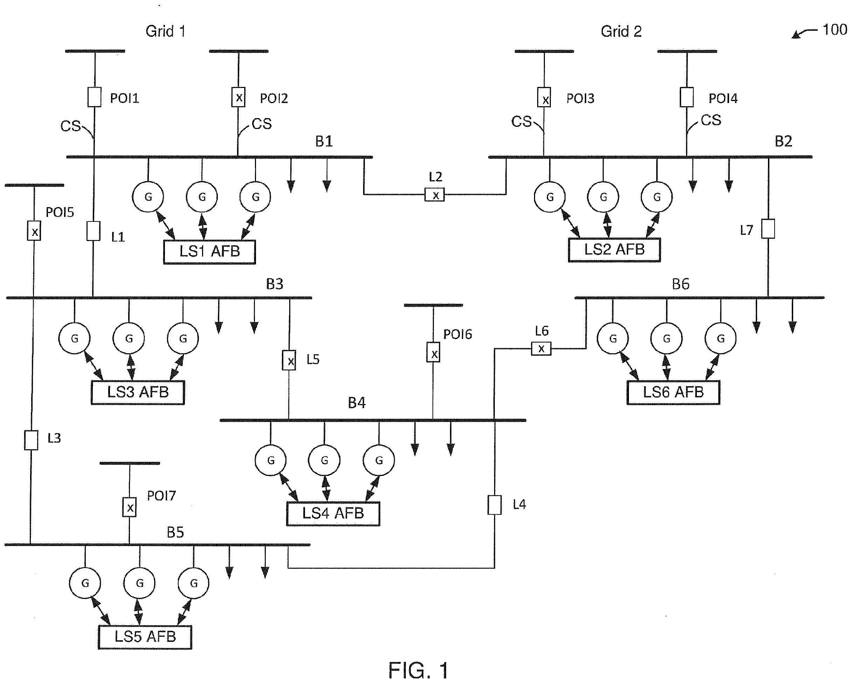

FIG. 1 shows an example topology 100 with zonal autonomous control (ZAC) load sharing in accordance with one embodiment of the present disclosure.

Referring to FIG. 1, the topology 100 is for a grid network that includes multiple grids (e.g., Grid 1, Grid 2), multiple POIs (e.g. POI1 - POI7), buses (e.g., B1 - B5), lines (e.g., L1 - L7), and physical assets (G). Each bus (B) and corresponding physical assets (G) are controlled by a LS instance (e.g., LS1 AFB - LS6 AFB). The top level (e.g., level 0) LS AFBs are LS1 AFB and LS2 AFB. The lower level LS AFBs are LS3 AFB, LS4 AFB, LS5 AFB, and LS 6 AFB. Each LS AFB uses fixed bidirectional communications (e.g., for data and setpoints) between the LS AFB and physical assets connected to a respective bus (B). The links between the LS1 AFB and POI1 and POI2 are constrained links (CS), as are the links between LS2 AFB and POI3 and POI4, and the link between LS5 AFB and B3.

In one or more embodiments, one LS AFB (e.g., as shown in FIG. 1) may be assigned for (e.g., dedicated to) each network bus (B - see FIG. 1). The mapping between assets (G) and LS AFBs may be fixed, which significantly simplifies communications between physical devices including LS AFBs and asset controllers. Changes in the topology 100 may be replicated in the connectivity between individual bus LS AFB, and no topology processor is needed. One LS AFB may be dedicated to a respective bus so that there is a 1:1 relationship between LS AFB and bus.

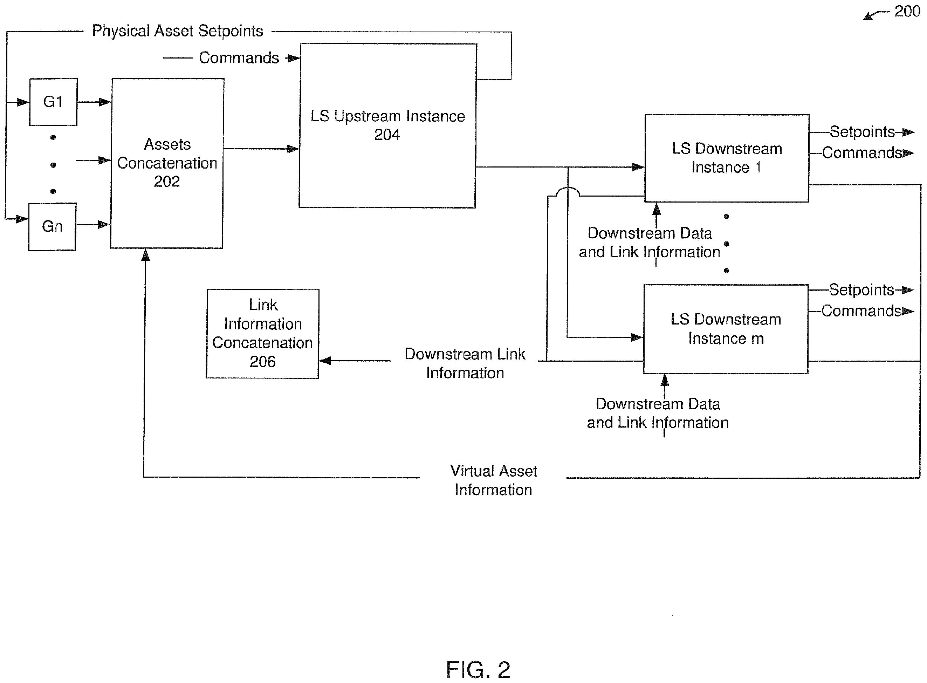

FIG. 2 is a block diagram 200 of example load sharing instances in the upstream and downstream directions in accordance with one embodiment of the present disclosure.

Referring to FIG. 2, for physical assets G1 -Gn, the physical assets data of the physical assets may be concatenated by an assets concatenation 202, which may provide physician and next adjacent level downstream virtual assets data to a LS upstream instance 204. The LS upstream instance may issue downstream commands to LS downstream instances (e.g., LS downstream instance 1 - LS downstream instance m). The LS downstream instances each may receive physical and next adjacent level downstream virtual assets data and next adjacent downstream link information. The LS downstream instances may provide virtual asset as aggregated asset data (e.g., from the assets physically connected to the respective bus of the LS downstream instance and from the downstream asset data collected from one or more lower levels) to the assets concatenation 202 to be provided to the LS upstream instance 204. In this manner, a LS upstream instance 204 may receive the branch limits and aggregated asset data from each of the lower levels of the topology as provided by the LS downstream instance one level below. The LS downstream instances may provide their downstream link information to a link information concatenation 206, which may provide the downstream links information for the downstream assets to the LS upstream instance 204.

Still referring to FIG. 2, the LS upstream instance 204 may use the downstream information to determine physical asset setpoints, and may provide the physical asset setpoints to the physical assets G1-Gn. The LS upstream instance 204 may receive upstream dispatch commands or top level external commands, and may issue corresponding dispatch commands to the LS downstream instances. The LS downstream instances may implement physical asset setpoints from the LS upstream instance 204 and may issue downstream commands to implement the setpoints at downstream assets.

In one or more embodiments, a single bus and hierarchical topology of power generation may be fully configured and covered by one LS instance per bus using the following inputs: Control type (e.g., indicating whether the instance is a top level instance), active asset mask (e.g., indicating whether there are physical or potential virtual part-assets to be connected), link parameters (e.g., indicating link limits and their application), active downstream link mask (e.g., indicating whether there are potential links from downstream load sharing instance), and downstream link connected (e.g., indicating if a downstream link is topologically connected to the upstream bus).

In FIG. 2, a given LS AFB (e.g., dedicated LS instance) at a topology level may represent a LS downstream instance unless the LS AFB is the top-level LS instance of the topology. When there are lower-level buses physically connected to the LS AFB, the LS AFB may represent a LS upstream instance 204 because the lower-level LS AFB(s) dedicated to physically connected lower-level buses will send their branch limits and aggregated asset data to the LS AFB acting as the LS upstream instance 202. When the LS AFB is a lowest-level of the topology (e.g., has no lower-level bus physically connected), then the LS AFB may not function as an LS upstream instance 204. In this manner, the lowest-level LS AFBs may provide the branch limits and asset data (e.g., for the assets physically connected to the respective bus) to the next adjacent level LS AFB (e.g., one level up in the topology). The next adjacent level LS AFB functions as the LS upstream instance 204 for the LS AFBs at levels below its bus. In this manner, the LS upstream instance 204 sets the setpoints and branch limits for the level(s) below based on the data from the level below, which may included aggregated data from one or more even lower levels.

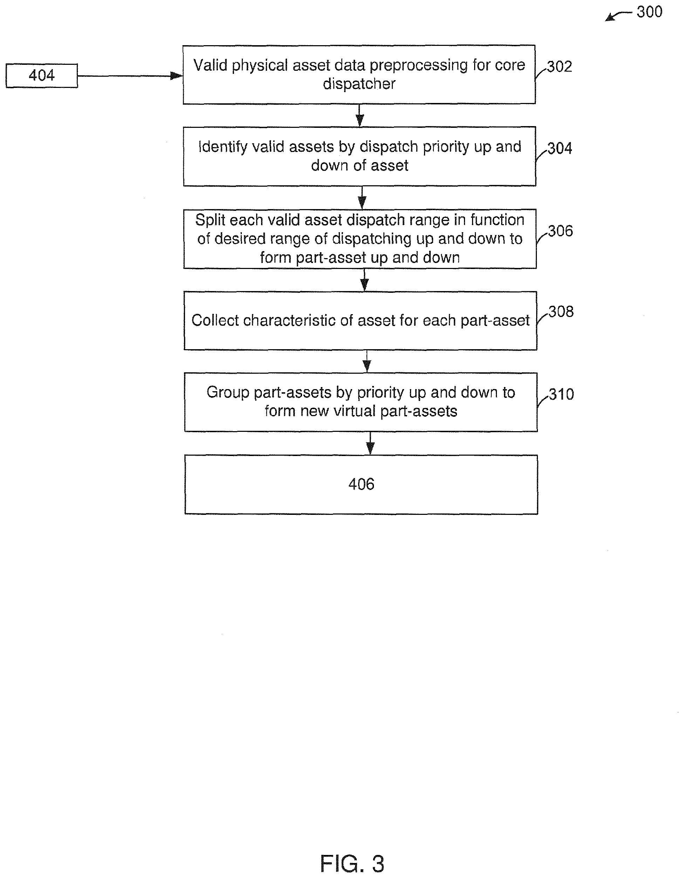

FIG. 3 shows an example flow of a process 300 for virtual part-asset creation for ZAC load sharing in accordance with one embodiment of the present disclosure.

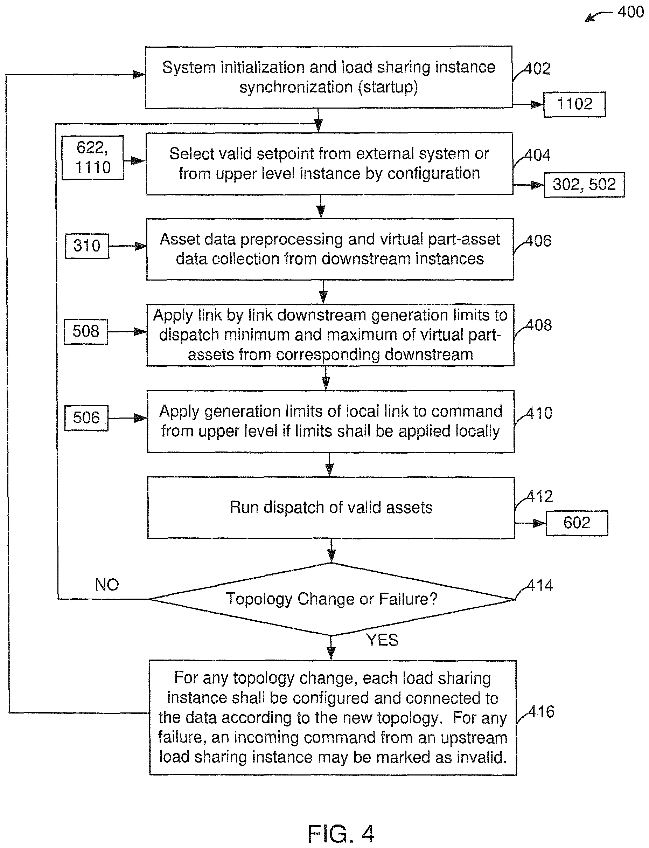

At block 302, the process 300 may include valid physical asset data preprocessing for a core dispatcher (e.g., based on block 404 of FIG. 4).

At block 304, the process 300 may identify valid assets by dispatch priority up and down of assets.

At block 306, each valid asset dispatch range may be split in function of a desired range of dispatching up and down to form a part-asset up and down.

At block 308, characteristics of an asset for each part-asset may be collected.

At block 310, part-assets may be grouped by priority up and down to form new virtual part-assets. Block 310 may continue to block 406 of FIG. 4.

FIG. 4 shows an example flow of a process 400 for ZAC load sharing in accordance with one embodiment of the present disclosure.

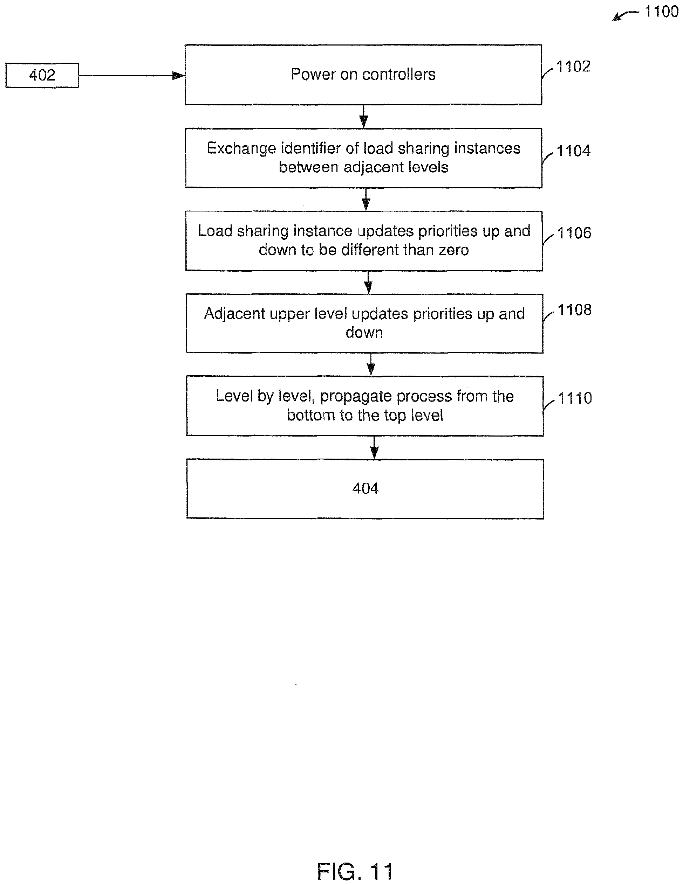

At block 402, a system startup may include system initialization and LS instance synchronization. Block 402 may continue to block 1102 of FIG. 11.

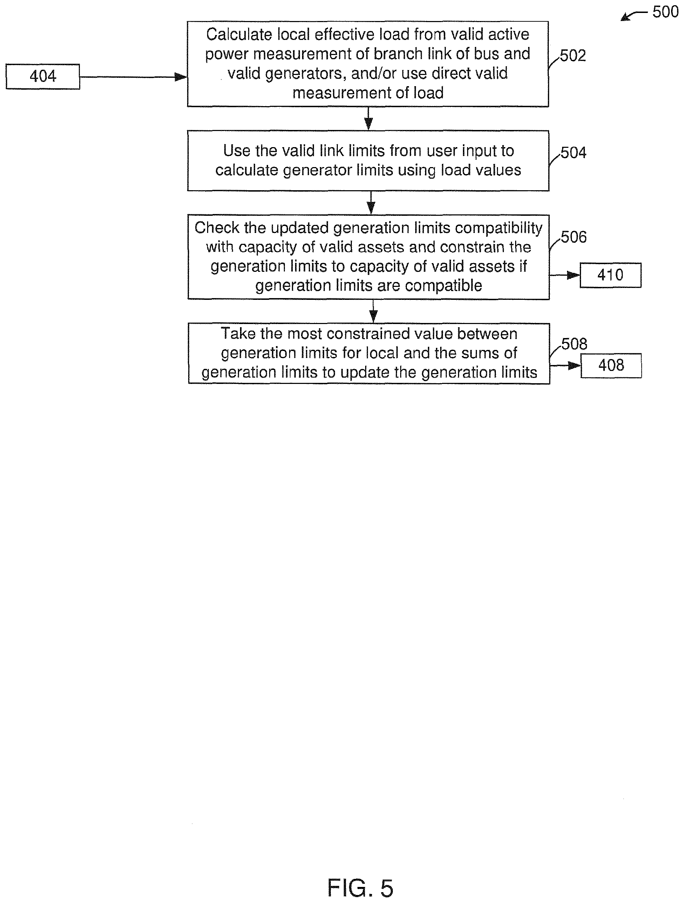

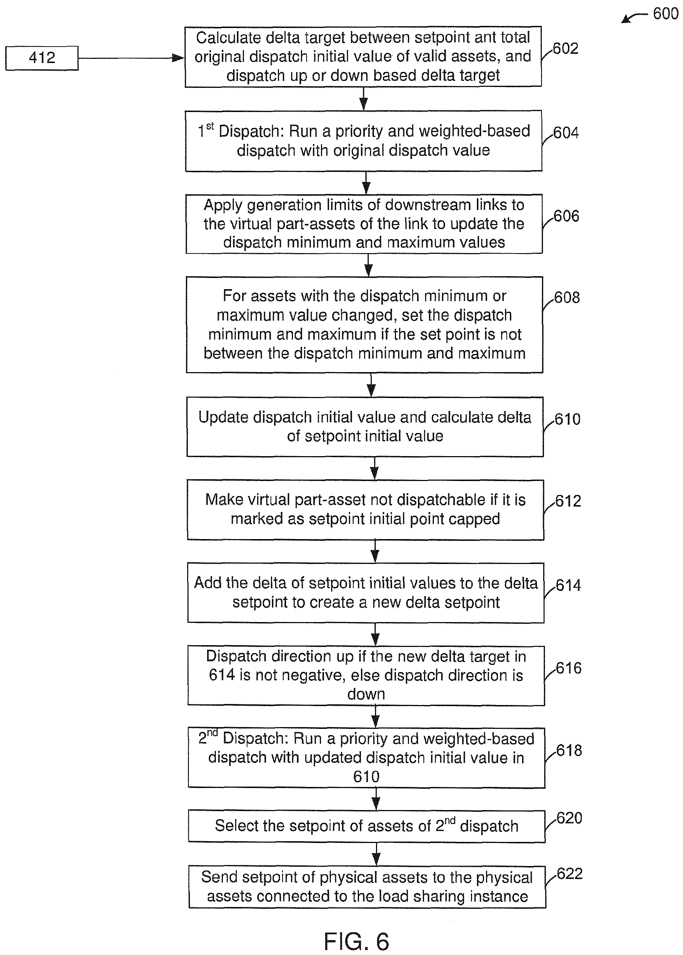

At block 404, the process 400 may select a valid setpoint from an external system or from the upper level instance by configuration (e.g., based on block 622 of FIG. 6 and/or block 1110 of FIG. 11). The setpoint for the top level is from the external system, and the setpoint for any sub-level is from its adjacent upper level. Block 404 may process part-asset and generation limits calculations from a respective branch link limit. Block 404 may continue to block 302 of FIG. 3 and/or to block 502 of FIG. 5.

At block 406, the process 400 may include asset data preprocessing and virtual part-asset data collection from downstream instances (e.g., based on block 310 of FIG. 3).

At block 408, the process 400 may apply link by link downstream generation limits to dispatch minimum and maximum of virtual part-assets from a corresponding downstream (e.g., based on block 508 of FIG. 5).

At block 410, the process 400 may include applying generation limits of a local link to command from the upper level if the limits are to be applied locally (e.g., based on block 506 of FIG. 5).

At block 412, the process 400 may run a dispatch of valid assets, and may continue to block 602 of FIG. 6.

At block 414, the process 400 may determine whether a topology changed or a failure has occurred. If not, the process 400 returns to block 404. If so, the process 400 does at least one of the following. For any topology change, each load sharing instance may be configured and connected to the data according to a new topology. The system of load sharing may restart, and during this process, the setpoint of assets may be frozen until a new valid setpoint is ready. An external asset ramp limiter may smooth the setpoint sent to the asset. Any failure, such as power of a controller, a communication issue, invalidity of configuration and data on a load sharing instance may lead to an incoming command from an upstream load sharing instance marked as invalid with the setpoint frozen, and the command may be marked to the lower level load sharing instances as invalid with the setpoint frozen. The setpoint to any physical asset may be marked as invalid and frozen if it is connected to any impacted load sharing instance described above.

FIG. 5 shows an example flow of a process 500 for link limit calculation for ZAC load sharing in accordance with one embodiment of the present disclosure.

At block 502, the process 500 may calculate a local effective load from a valid active power measurement of a branch link of a bus and valid generators, and/or may use direct valid measurements of loads (e.g., based on block 404 of FIG. 4).

At block 504, the process 500 may use the valid link limits from a user input to calculate generator limits using load values.

At block 506, the process 500 may check the updated generation limits' compatibility with capacity of valid assets and constrain the generation limits to capacity of valid assets if the generation limits are compatible. Otherwise, the generation limits for local use are updated to the considered link limit. The process may continue to block 410 of FIG> 4.

At block 508, the process may take the most constrained value between generation limits for local and the sums of generation limits considering the generation limits from downstream next adjacent levels to update the generation limits. The generation limits may be sent to the upper level for dispatch at the system level.

FIG. 6 shows an example flow of a process 600 for dispatch of valid assets for ZAC load sharing in accordance with one embodiment of the present disclosure.

At block 602, the process 600 may calculate a delta target between setpoint and total original dispatch initial value of valid assets (e.g., based on block 412 of FIG. 4). The dispatch direction may be up if the delta target is not negative, otherwise the dispatch direction is down.

At block 604, the process 600 may perform a first run in which a priority and weighted-based dispatch are run with original dispatch initial value, minimum and maximum value of assets according to the dispatch direction and delta target.

At block 606, the process 600 may apply generation limits of downstream links to the virtual part-assets to the link to update the dispatch minimum and maximum values.

At block 608, the process 600 may, for the assets whose dispatch minimum or maximum value has changed, if the setpoint of the asset calculated by the first dispatch at block 604 is not between the updated dispatch minimum and maximum values at block 606: (1) the dispatch minimum and maximum values are set to the dispatch minimum value if the calculated setpoint of the asset is less than the dispatch minimum value. (2) The dispatch minimum and maximum values are set to dispatch maximum value if the calculated setpoint of the asset is greater than the dispatch maximum value.

At block 610, the process 600 may include an updated dispatch initial value if it is not between the updated dispatch minimum and maximum value in block 608 and mark the asset as dispatch initial value capped. Block 610 may calculate the delta of the setpoint initial value after the saturation of the dispatch initial value by the dispatch minimum value and maximum values are updated at block 608.

At block 612, the process 600 may make the virtual part-asset not dispatchable if it is marked as setpoint initial point capped.

At block 614, the process 600 may add the delta of the setpoint initial values to the delta setpoint to create a new delta setpoint.

At block 616, the process may set the dispatch direction up if the new delta target at block 614 is not negative, otherwise the dispatch direction is down.

At block 618, a second dispatch may run a priority and weighted-based dispatch with updated dispatch initial value from block 610, the minimum and maximum value of assets at block 608 according to the updated dispatch direction at block 616, and the delta setpoint at block 614.

At block 620, the process 600 may select the setpoint of assets of the second dispatch if any setpoint of assets of the first dispatch is not between the dispatch minimum and maximum value updated at block 606.

At block 622, the process 600 may send the setpoint of physical assets to the physical assets connected to the load sharing instance one by one and group the setpoint of virtual part-assets of each link, and send this total setpoint by link as part of a downstream command indicating that it is valid and if there is a correction. The process may continue to block 404 of FIG. 4.

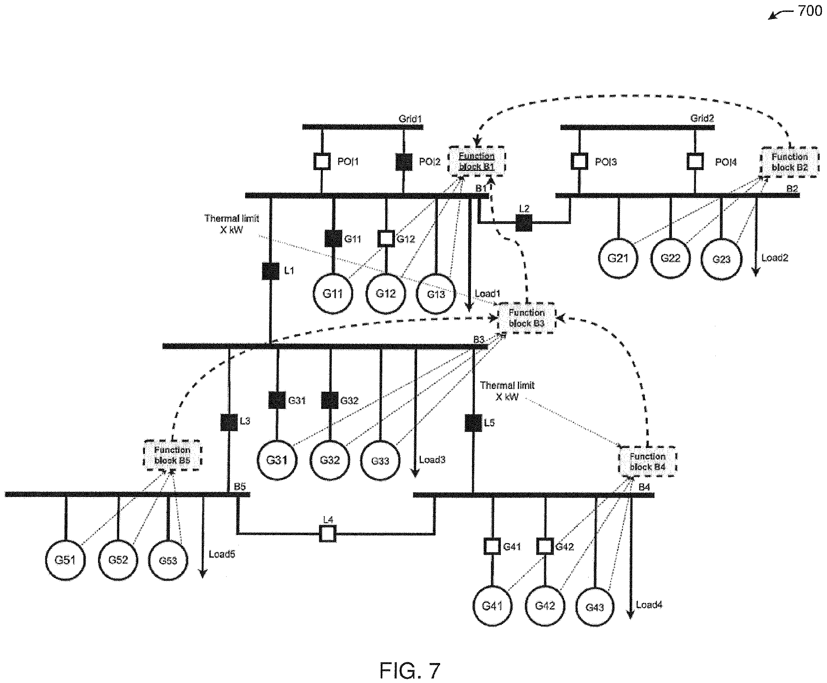

FIG. 7 shows an example asset data and link gathering of a topology 700 with ZAC load sharing in accordance with one embodiment of the present disclosure.

Referring to FIG. 7, the topology 700 includes multiple grids (e.g., Grid1, Grid 2), multiple breakers (e.g., B1 - B5) connected to multiple physical assets (e.g., G11, G12, G13, G21, G22, G23, G31, G32, G33, G41, G42, G43), POI1-POI4, and lines L1-L5.

In FIG. 7, the circuit breakers for L1, L2, L3, L5, G11, G31, G32, and POI2 are closed, and the circuit breakers for POI1, POI3, POI4, G12, G41, G42, and L4 are open. Function Blocks B1 - B4 control respective physical assets for the respective breakers B1-B4. A bottom up data exchange includes data exchanges between adjacent load sharing instances. For example, Function Block B5 and Function Block B4 provide asset and link data to the Function Block B3, and the Function Block B3 provides its asset and link data along with the lower level asset and link data from Function Blocks B4 and B5 to Function Block B1. Function Block B2 also provides its asset and link data to the Function Block B1. As a result, the Function Block B1 as the top level may gather asset and link limit data of each level of the topology 700 (e.g., as the top level load sharing instance).

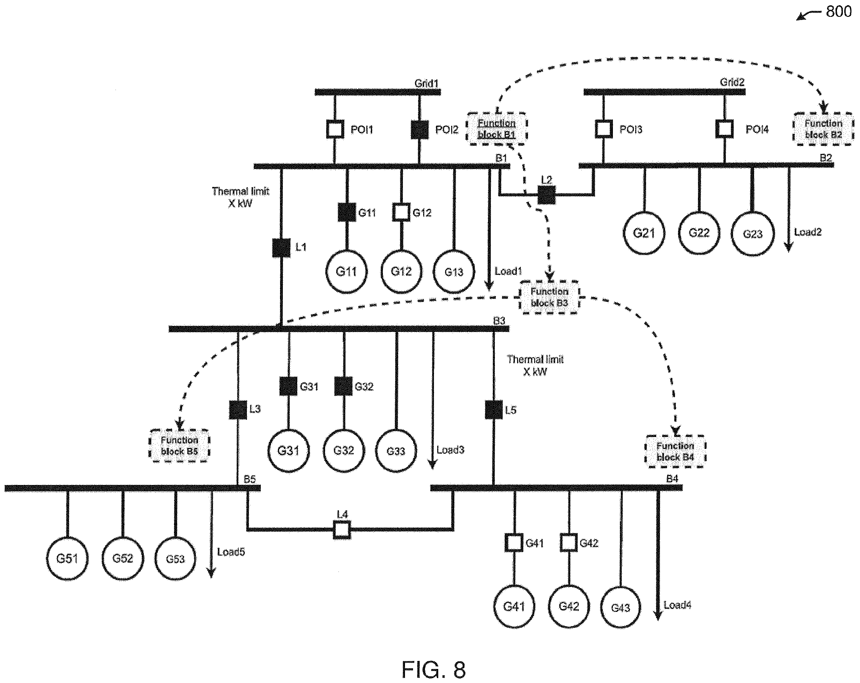

FIG. 8 shows an example command of the topology 700 of FIG. 7 in accordance with one embodiment of the present disclosure.

Using the asset data and link limit data of the topology 700, the Function Block B1 as the top level load sharing instance may determine the link limits (e.g., thermal limits) and loads (e.g., setpoints) to apply to the lower levels via an up down command between adjacent load sharing instances. In particular, the Function Block B1 may provide a command with the link limits and setpoints to the Function Block 2 to apply to its links and assets. Function Block B1 may provide a command to the Function Block 3 with the link limits and setpoints to apply to the links and assets at the level of Function Block B3 and to lower levels (e.g., Function Block B4 and Function Block B5). The Function Block B3 may provide the commands with the link limits and setpoints to the Function Block B4 and to the Function Block B5, respectively.

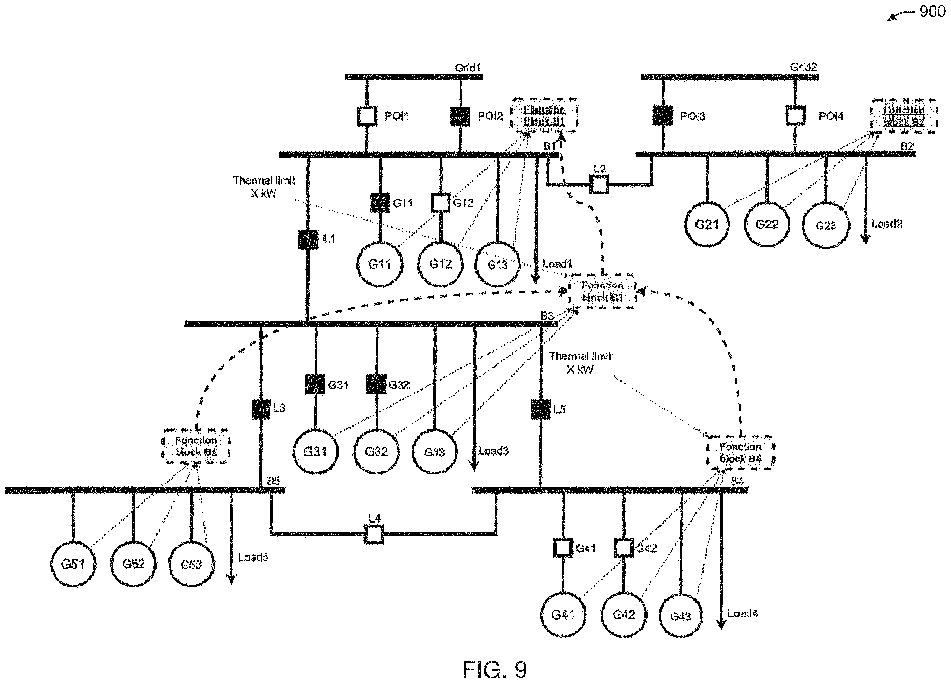

FIG. 9 shows an example asset data and link gathering of a topology 900 with ZAC load sharing in accordance with one embodiment of the present disclosure.

Compared to the topology 700 of FIG.7, the difference in FIG. 9 is that the topology 900 has breaker L2 opened and POI3 closed, while Function Block B2 is disconnected from B1 and behaves as a top level block like Function Block B1.

As a result, the Function Blocks B4 and B5 each provide their asset data and link limits to the Function Block B3 as the next adjacent level instance. The Function Block B3 provides its link limits and asset data, along with the link limits and asset data from the Function Blocks B4 and B5, to the Function Block 1 as the next adjacent level instance. The Function Block B2 is a top level instance, but breaker B2 is not connected to any lower levels. As a result, the Function Block B2 manages the link limits and setpoints for its links and assets in this example.

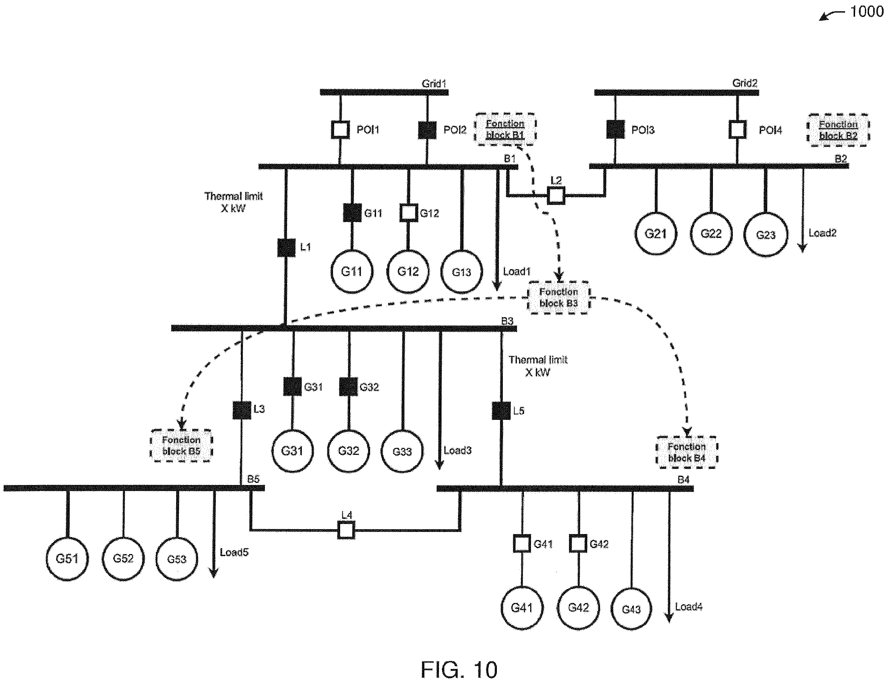

FIG. 10 shows an example command of the topology of FIG. 900 in accordance with one embodiment of the present disclosure.

As a result of the data gathering in FIG. 9, the Function Block B1 may calculate and provide setpoints and link limits for the lower levels. In particular, the Function Block B1 provides link limits and setpoints for Function Blocks B3-B5 to the Function Block B3. The Function Block B3 may provide the link limits and setpoints to the Function Blocks B4 and B4 in a top down command process.

FIG. 11 shows an example flow of a process 1100 for system initialization and load sharing instance synchronization for ZAC load sharing in accordance with one embodiment of the present disclosure.

At block 1102, continuing from block 402 of FIG. 4, the process 1100 may power on all controllers.

At block 1104, once a controller is running, load sharing instances are in startup, and the identifier of a load sharing instance between two adjacent levels may be exchanged in both directions (up and down) regardless of the topology, and may identify itself as a bottom level instance based on the instance configuration.

At block 1106, once the identification has been performed at block 1104, the load sharing instance of bottom levels start updating the priorities up and down to be different than zero.

At block 1108, the adjacent upper level updates the priorities up and down to be different than zero when it has priorities up and down different than zero from all of its adjacent lower level(s) according to the topology.

At block 1110, level by level, the process may be propagated from the bottom levels to the top level. Once the top level has priorities up and down different than zero from all its adjacent lower level(s) according to the topology, the startup is finished, and the process may continue to block 404 of FIG. 4.

It is understood that the above descriptions are for purposes of illustration and are not meant to be limiting.

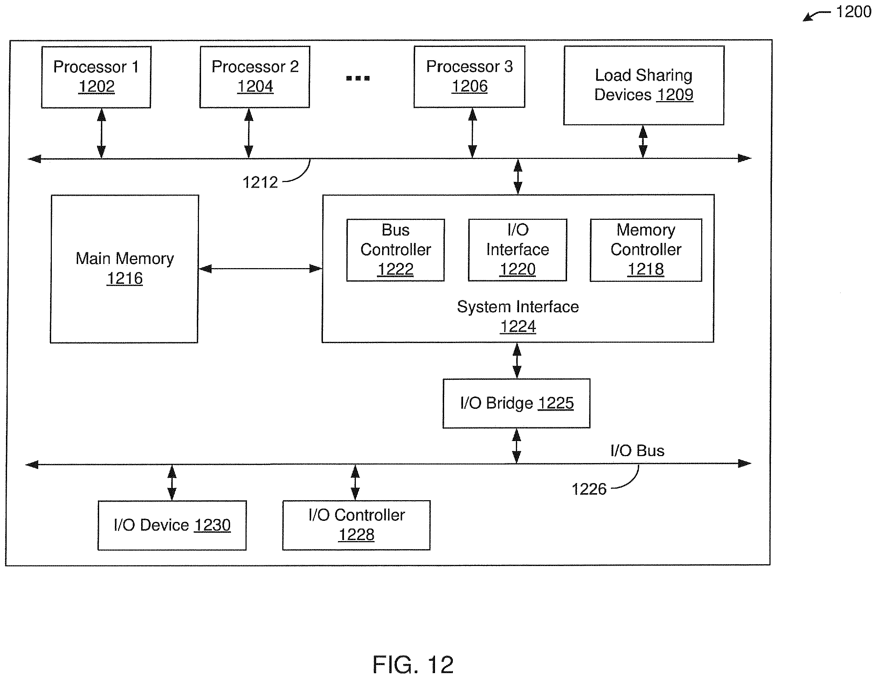

FIG. 12 is a diagram illustrating an example of a computing system 1200 that may be used in implementing embodiments of the present disclosure.

For example, the computing system 1200 of FIG. 12 may represent at least a portion of the components of FIGs. 1, 2, and 7-10, and capable of performing the functions and processes discussed above with regard to FIGs. 1-11, including load sharing, virtual part-asset creation, link limit calculations, valid asset dispatch, layer-based data exchanges, topology commands, system startup, and the like.

The computer system (system) includes one or more processors 1202-1206 and one or more compensator devices 1209 (e.g., representing communications circuitry and/or processing circuitry for intercommunications - wirelessly and/or wired - between SSSC and FSC devices, and for controlling the SSSC and FSC devices, such as opening and closing switches, applying the surge protection, and the like). Processors 1202-1206 may include one or more internal levels of cache (not shown) and a bus controller 1222 or bus interface unit to direct interaction with the processor bus 1212. Processor bus 1212, also known as the host bus or the front side bus, may be used to couple the processors 1202-1206 with the system interface 1224. System interface 1224 may be connected to the processor bus 1212 to interface other components of the system 1200 with the processor bus 1212. For example, system interface 1224 may include a memory controller 1218 for interfacing a main memory 1216 with the processor bus 1212. The main memory 1216 typically includes one or more memory cards and a control circuit (not shown). System interface 1224 may also include an input/output (I/O) interface 1220 to interface one or more I/O bridges 1225 or I/O devices with the processor bus 1212. One or more I/O controllers and/or I/O devices may be connected with the I/O bus 1226, such as I/O controller 1228 and I/O device 1230, as illustrated.

I/O device 1230 may also include an input device (not shown), such as an alphanumeric input device, including alphanumeric and other keys for communicating information and/or command selections to the processors 1202-1206. Another type of user input device includes cursor control, such as a mouse, a trackball, or cursor direction keys for communicating direction information and command selections to the processors 1202-1206 and for controlling cursor movement on the display device.

System 1200 may include a dynamic storage device, referred to as main memory 1216, or a random access memory (RAM) or other computer-readable devices coupled to the processor bus 1212 for storing information and instructions to be executed by the processors 1202-1206. Main memory 1216 also may be used for storing temporary variables or other intermediate information during execution of instructions by the processors 1202-1206. System 1200 may include a read only memory (ROM) and/or other static storage device coupled to the processor bus 1212 for storing static information and instructions for the processors 1202-1206. The system outlined in FIG. 12 is but one possible example of a computer system that may employ or be configured in accordance with aspects of the present disclosure.

According to one embodiment, the above techniques may be performed by computer system 1200 in response to processor 1204 executing one or more sequences of one or more instructions contained in main memory 1216. These instructions may be read into main memory 1216 from another machine-readable medium, such as a storage device. Execution of the sequences of instructions contained in main memory 1216 may cause processors 1202-1206 to perform the process steps described herein. In alternative embodiments, circuitry may be used in place of or in combination with the software instructions. Thus, embodiments of the present disclosure may include both hardware and software components.

A machine readable medium includes any mechanism for storing or transmitting information in a form (e.g., software, processing application) readable by a machine (e.g., a computer). Such media may take the form of, but is not limited to, non-volatile media and volatile media and may include removable data storage media, non-removable data storage media, and/or external storage devices made available via a wired or wireless network architecture with such computer program products, including one or more database management products, web server products, application server products, and/or other additional software components. Examples of removable data storage media include Compact Disc Read-Only Memory (CD-ROM), Digital Versatile Disc Read-Only Memory (DVD-ROM), magneto-optical disks, flash drives, and the like. Examples of non-removable data storage media include internal magnetic hard disks, SSDs, and the like. The one or more memory devices 1206 may include volatile memory (e.g., dynamic random access memory (DRAM), static random access memory (SRAM), etc.) and/or non-volatile memory (e.g., read-only memory (ROM), flash memory, etc.).

Computer program products containing mechanisms to effectuate the systems and methods in accordance with the presently described technology may reside in main memory 1216, which may be referred to as machine-readable media. It will be appreciated that machine-readable media may include any tangible non-transitory medium that is capable of storing or encoding instructions to perform any one or more of the operations of the present disclosure for execution by a machine or that is capable of storing or encoding data structures and/or modules utilized by or associated with such instructions. Machine-readable media may include a single medium or multiple media (e.g., a centralized or distributed database, and/or associated caches and servers) that store the one or more executable instructions or data structures.

Embodiments of the present disclosure include various steps, which are described in this specification. The steps may be performed by hardware components or may be embodied in machine-executable instructions, which may be used to cause a general-purpose or special-purpose processor programmed with the instructions to perform the steps. Alternatively, the steps may be performed by a combination of hardware, software and/or firmware.

Various modifications and additions can be made to the exemplary embodiments discussed without departing from the scope of the present invention. For example, while the embodiments described above refer to particular features, the scope of this invention also includes embodiments having different combinations of features and embodiments that do not include all of the described features. Accordingly, the scope of the present invention is intended to embrace all such alternatives, modifications, and variations together with all equivalents thereof.

It is understood that the above descriptions are for purposes of illustration and are not meant to be limiting.

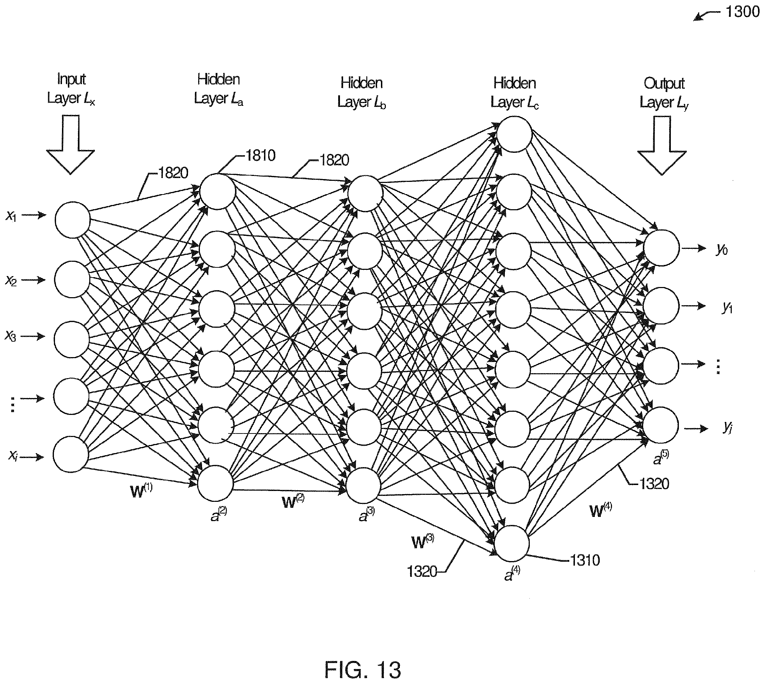

FIG. 13 illustrates an example neural network 1300, in accordance with one or more embodiments.

FIG. 13 illustrates an example neural network (NN) 1300, which may be suitable for use by one or more of the computing systems (or subsystems) of the various implementations discussed herein, implemented in part by a HW accelerator, and/or the like. The NN 1300 may be deep neural network (DNN) used as an artificial brain of a compute node or network of compute nodes to handle very large and complicated observation spaces. Additionally or alternatively, the NN 1300 can be some other type of topology (or combination of topologies), such as a convolution NN (CNN), deep CNN (DCN), recurrent NN (RNN), Long Short Term Memory (LSTM) network, a Deconvolutional NN (DNN), gated recurrent unit (GRU), deep belief NN, a feed forward NN (FFN), a deep FNN (DFF), deep stacking network, Markov chain, perception NN, Bayesian Network (BN) or Bayesian NN (BNN), Dynamic BN (DBN), Linear Dynamical System (LDS), Switching LDS (SLDS), Optical NNs (ONNs), an NN for reinforcement learning (RL) and/or deep RL (DRL), and/or the like. NNs are usually used for supervised learning, but can be used for unsupervised learning and/or reinforcement (RL).

The NN 1300 may encompass a variety of ML techniques where a collection of connected artificial neurons 1310 that (loosely) model neurons in a biological brain that transmit signals to other neurons/nodes 1310. The neurons 1310 may also be referred to as nodes 1310, processing elements (PEs) 1310, or the like. The connections 1320 (or edges 1320) between the nodes 1310 are (loosely) modeled on synapses of a biological brain and convey the signals between nodes 1310. Note that not all neurons 1310 and edges 1320 are labeled in Figure 13 for the sake of clarity.

Each neuron 1310 has one or more inputs and produces an output, which can be sent to one or more other neurons 1310 (the inputs and outputs may be referred to as "signals"). Inputs to the neurons 1310 of the input layer *Lₓ* can be feature values of a sample of external data (e.g., input variables *xᵢ*). The input variables *xᵢ* can be set as a vector containing relevant data (e.g., observations, ML features, and the like). The inputs to hidden units 1310 of the hidden layers *Lₐ, L_{b},* and *L_{c}* may be based on the outputs of other neurons 1310. The outputs of the final output neurons 1310 of the output layer *L_{y}* (e.g., output variables *yⱼ*) include predictions, inferences, and/or accomplish a desired/configured task. The output variables *yⱼ* may be in the form of determinations, inferences, predictions, and/or assessments. Additionally or alternatively, the output variables *yⱼ*can be set as a vector containing the relevant data (e.g., determinations, inferences, predictions, assessments, and/or the like).

In the context of ML, an "ML feature" (or simply "feature") is an individual measurable property or characteristic of a phenomenon being observed. Features are usually represented using numbers/numerals (e.g., integers), strings, variables, ordinals, real-values, categories, and/or the like. Additionally or alternatively, ML features are individual variables, which may be independent variables, based on observable phenomenon that can be quantified and recorded. ML models use one or more features to make predictions or inferences. In some implementations, new features can be derived from old features.

Neurons 1310 may have a threshold such that a signal is sent only if the aggregate signal crosses that threshold. A node 1310 may include an activation function, which defines the output of that node 1310 given an input or set of inputs. Additionally or alternatively, a node 1310 may include a propagation function that computes the input to a neuron 1810 from the outputs of its predecessor neurons 1310 and their connections 1320 as a weighted sum. A bias term can also be added to the result of the propagation function.

The NN 1300 also includes connections 1320, some of which provide the output of at least one neuron 1310 as an input to at least another neuron 1310. Each connection 1320 may be assigned a weight that represents its relative importance. The weights may also be adjusted as learning proceeds. The weight increases or decreases the strength of the signal at a connection 1320.

The neurons 1310 can be aggregated or grouped into one or more layers L where different layers L may perform different transformations on their inputs. In Figure 18, the NN 1300 comprises an input layer *Lₓ,* one or more hidden layers *Lₐ, L_{b},* and *L_{c},* and an output layer *L_{y}* (where *a, b, c, x,* and y may be numbers),where each layer *L* comprises one or more neurons Fehler! **Verweisquelle konnte nicht gefunden** werden.10. Signals travel from the first layer (e.g., the input layer *L₁*), to the last layer (e.g., the output layer *L_{y}),* possibly after traversing the hidden layers *Lₐ, L_{b},* and *L_{c}*multiple times. In Figure 13, the input layer *Lₐ* receives data of input variables *xᵢ* (where *i* = 1, ...,*p*, where *p* is a number). Hidden layers *Lₐ, L_{b},* and *L_{c}* processes the inputs *xᵢ*, and eventually, output layer *L_{y}* provides output variables *yⱼ* (where *j* = 1, ..., p', where *p'* is a number that is the same or different than p). In the example of Figure Fehler! **Verweisquelle konnte nicht gefunden werden.,** for simplicity of illustration, there are only three hidden layers *Lₐ, L_{b},* and *L_{c}* in the NN 1300, however, the NN 1300 may include many more (or fewer) hidden layers *Lₐ, L_{b},* and *L_{c}* than are shown.

The term "cloud computing" or "cloud" at least in some examples refers to a paradigm for enabling network access to a scalable and elastic pool of shareable computing resources with self-service provisioning and administration on-demand and without active management by users. Cloud computing provides cloud computing services (or cloud services), which are one or more capabilities offered via cloud computing that are invoked using a defined interface (e.g., an API or the like).

The term "compute resource" or simply "resource" at least in some examples refers to an object with a type, associated data, a set of methods that operate on it, and, if applicable, relationships to other resources. Additionally or alternatively, the term "compute resource" or "resource" at least in some examples refers to any physical or virtual component, or usage of such components, of limited availability within a computer system or network. Examples of computing resources include usage/access to, for a period of time, servers, processor(s), storage equipment, memory devices, memory areas, networks, electrical power, input/output (peripheral) devices, mechanical devices, network connections (e.g., channels/links, ports, network sockets, and the like), operating systems, virtual machines (VMs), software/applications, computer files, and/or the like. A "hardware resource" at least in some examples refers to compute, storage, and/or network resources provided by physical hardware element(s). A "virtualized resource" at least in some examples refers to compute, storage, and/or network resources provided by virtualization infrastructure to an application, device, system, and the like. The term "network resource" or "communication resource" at least in some examples refers to resources that are accessible by computer devices/systems via a communications network. The term "system resources" at least in some examples refers to any kind of shared entities to provide services, and includes computing and/or network resources. System resources may be considered as a set of coherent functions, network data objects or services, accessible through a server where such system resources reside on a single host or multiple hosts and are clearly identifiable.

The term "cloud service provider" or "CSP" at least in some examples refers to an organization that operates or otherwise provides cloud resources including, for example, centralized, regional, and/or edge data centers and/or the like. In some examples, the term "cloud computing" refers to computing resources and services offered by a CSP.

The term "data center" at least in some examples refers to a purpose-designed structure that is intended to house multiple high-performance compute and data storage nodes such that a large amount of compute, data storage and network resources are present at a single location. This often entails specialized rack and enclosure systems, suitable heating, cooling, ventilation, security, fire suppression, and power delivery systems. The term may also refer to a compute and data storage node in some contexts. A data center may vary in scale between a centralized or cloud data center (e.g., largest), regional data center, and edge data center (e.g., smallest).

The term "application programming interface" or "API" at least in some examples refers to a set of subroutine definitions, communication protocols, and tools for building software. Additionally or alternatively, the term "application programming interface" or "API" at least in some examples refers to a set of clearly defined methods of communication among various components. In some examples, an API may be defined or otherwise used for a web-based system, operating system, database system, computer hardware, software library, and/or the like.

The terms "instantiate," "instantiation," and the like at least in some examples refers to the creation of an instance. In some examples, an "instance" also at least in some examples refers to a concrete occurrence of an object, which may occur, for example, during execution of program code.

The term "feature" at least in some examples refers to an individual measureable property, quantifiable property, or characteristic of a phenomenon being observed. Additionally or alternatively, the term "feature" at least in some examples refers to an input variable used in making predictions. At least in some examples, features may be represented using numbers/numerals (e.g., integers), strings, variables, ordinals, real-values, categories, and/or the like.

The term "feature engineering" at least in some examples refers to a process of determining which features might be useful in training an ML model, and then converting raw data into the determined features. Feature engineering is sometimes referred to as "feature extraction."

The term "feature extraction" at least in some examples refers to a process of dimensionality reduction by which an initial set of raw data is reduced to more manageable groups for processing. Additionally or alternatively, the term "feature extraction" at least in some examples refers to retrieving intermediate feature representations calculated by an unsupervised model or a pretrained model for use in another model as an input. Feature extraction is sometimes used as a synonym of "feature engineering."

The term "feature map" at least in some examples refers to a function that takes feature vectors (or feature tensors) in one space and transforms them into feature vectors (or feature tensors) in another space. Additionally or alternatively, the term "feature map" at least in some examples refers to a function that maps a data vector (or tensor) to feature space. Additionally or alternatively, the term "feature map" at least in some examples refers to a function that applies the output of one filter applied to a previous layer. In some embodiments, the term "feature map" may also be referred to as an "activation map".

The term "feature vector" at least in some examples, in the context of ML, refers to a set of features and/or a list of feature values representing an example passed into a model. Additionally or alternatively, the term "feature vector" at least in some examples, in the context of ML, refers to a vector that includes a tuple of one or more features.

The term "forward propagation" or "forward pass" at least in some examples, in the context of ML, refers to the calculation and storage of intermediate variables (including outputs) for a neural network in order from the input layer to the output layer.

The term "hidden layer", in the context of ML and NNs, at least in some examples refers to an internal layer of neurons in an ANN that is not dedicated to input or output. The term "hidden unit" refers to a neuron in a hidden layer in an ANN.

The term "hyperparameter" at least in some examples refers to characteristics, properties, and/or parameters for an ML process that cannot be learnt during a training process. Hyperparameter are usually set before training takes place, and may be used in processes to help estimate model parameters. Examples of hyperparameters include model size (e.g., in terms of memory space, bytes, number of layers, and the like); training data shuffling (e.g., whether to do so and by how much); number of evaluation instances, iterations, epochs (e.g., a number of iterations or passes over the training data), or episodes; number of passes over training data; regularization; learning rate (e.g., the speed at which the algorithm reaches (converges to) optimal weights); learning rate decay (or weight decay); momentum; number of hidden layers; size of individual hidden layers; weight initialization scheme; dropout and gradient clipping thresholds; the C value and sigma value for SVMs; the k in k-nearest neighbors; number of branches in a decision tree; number of clusters in a clustering algorithm; vector size; word vector size for NLP and NLU; and/or the like.

The term "inference engine" at least in some examples refers to a component of a computing system that applies logical rules to a knowledge base to deduce new information.

The terms "instance-based learning" or "memory-based learning" in the context of ML at least in some examples refers to a family of learning algorithms that, instead of performing explicit generalization, compares new problem instances with instances seen in training, which have been stored in memory. Examples of instance-based algorithms include k-nearest neighbor, and the like), decision tree Algorithms (e.g., Classification And Regression Tree (CART), Iterative Dichotomiser 3 (ID3), C4.5, chi-square automatic interaction detection (CHAID), and the like), Fuzzy Decision Tree (FDT), and the like), Support Vector Machines (SVM), Bayesian Algorithms (e.g., Bayesian network (BN), a dynamic BN (DBN), Naive Bayes, and the like), and ensemble algorithms (e.g., Extreme Gradient Boosting, voting ensemble, bootstrap aggregating ("bagging"), Random Forest and the like.

The term "bus" refers to a node to which one or more lines are connected, and which may include loads and/or generators. The term "branch" refers to a connection between respective buses. In this manner, a branch limit is the limit between two buses.

The term "loss function" or "cost function" at least in some examples refers to an event or values of one or more variables onto a real number that represents some "cost" associated with the event. A value calculated by a loss function may be referred to as a "loss" or "error". Additionally or alternatively, the term "loss function" or "cost function" at least in some examples refers to a function used to determine the error or loss between the output of an algorithm and a target value. Additionally or alternatively, the term "loss function" or "cost function" at least in some examples refers to a function are used in optimization problems with the goal of minimizing a loss or error.

The term "mathematical model" at least in some examples refer to a system of postulates, data, and inferences presented as a mathematical description of an entity or state of affairs including governing equations, assumptions, and constraints. The term "statistical model" at least in some examples refers to a mathematical model that embodies a set of statistical assumptions concerning the generation of sample data and/or similar data from a population; in some examples, a "statistical model" represents a data-generating process.

The term "machine learning" or "ML" at least in some examples refers to the use of computer systems to optimize a performance criterion using example (training) data and/or past experience. ML involves using algorithms to perform specific task(s) without using explicit instructions to perform the specific task(s), and/or relying on patterns, predictions, and/or inferences. ML uses statistics to build ML model(s) (also referred to as "models") in order to make predictions or decisions based on sample data (e.g., training data).

The term "machine learning model" or "ML model" at least in some examples refers to an application, program, process, algorithm, and/or function that is capable of making predictions, inferences, or decisions based on an input data set and/or is capable of detecting patterns based on an input data set. In some examples, a "machine learning model" or "ML model" is trained on a training data to detect patterns and/or make predictions, inferences, and/or decisions. In some examples, a "machine learning model" or "ML model" is based on a mathematical and/or statistical model. For purposes of the present disclosure, the terms "ML model", "AI model", "AI/MI, model", and the like may be used interchangeably.

The term "machine learning algorithm" or "ML algorithm" at least in some examples refers to an application, program, process, algorithm, and/or function that builds or estimates an ML model based on sample data or training data. Additionally or alternatively, the term "machine learning algorithm" or "ML algorithm" at least in some examples refers to a program, process, algorithm, and/or function that learns from experience w.r.t some task(s) and some performance measure(s)/metric(s), and an ML model is an object or data structure created after an ML algorithm is trained with training data. For purposes of the present disclosure, the terms "ML algorithm", "AI algorithm", "AI/MI, algorithm", and the like may be used interchangeably. Additionally, although the term "ML algorithm" may refer to different concepts than the term "ML model," these terms may be used interchangeably for the purposes of the present disclosure.

The term "machine learning application" or "ML application" at least in some examples refers to an application, program, process, algorithm, and/or function that contains some AI/ML model(s) and application-level descriptions. Additionally or alternatively, the term "machine learning application" or "ML application" at least in some examples refers to a complete and deployable application and/or package that includes at least one ML model and/or other data capable of achieving a certain function and/or performing a set of actions or tasks in an operational environment. For purposes of the present disclosure, the terms "ML application", "AI application", "AI/ML application", and the like may be used interchangeably.

The term "machine learning entity" or "ML entity" at least in some examples refers to an entity that is either an ML model or contains an ML model and ML model-related metadata that can be managed as a single composite entity (in some examples, metadata may include, for example, the applicable runtime context for the ML model). For purposes of the present disclosure, the term "AI/MI, entity" or "ML entity" at least in some examples refers to an entity that is either an AI/ML model and/or contains an AI/ML model and that can be managed as a single composite entity. Additionally, the term "ML entity training" at least in some examples refers to ML model training associated with an ML entity. Moreover, the term "AI/ML" may be used interchangeably with the terms "AI" and "ML" throughout the present disclosure.

The term "AI decision entity", "machine learning decision entity", or "ML decision entity" at least in some examples refers to an entity that applies a non-AI and/or non-ML based logic for making decisions that can be managed as a single composite entity.

The term "machine learning training", "ML training", or "MLT" at least in some examples refers to capabilities and associated end-to-end (e2e) processes to enable an ML training function to perform ML entity (or ML model) training (e.g., as defined herein). In some examples, ML training capabilities include interaction with other parties/entities to collect and/or format the data required for ML model training. Additionally or alternatively, "training an ML entity" refers to training one or more ML model(s) associated with an ML entity internally by an MLT function.

The term "machine learning model training" or "ML model training" at least in some examples refers to capabilities of an ML training function to take data, run the data through an ML model, derive associated loss, optimization, and/or objective/goal, and adjust the parameterization of the ML model based on the computed loss, optimization, and/or objective/goal.

The term "ML initial training" at least in some examples refers to ML entity training that generates an initial version of a trained ML entity.

The term "ML re-training" at least in some examples refers to MLT that generates a new version of a trained ML entity using the same type, but different values or distributions, of training data as that used to train the previous version of the ML entity. This new version of the trained ML entity (e.g., the re-trained ML entity) supports the same type of inference as the previous version of the ML entity, e.g., the data type of inference input and data type of inference output remain unchanged between the two versions of the ML entity

The term "machine learning training function", "ML training function", or "MLT function" at least in some examples refers to a (logical) function with MLT capabilities.

The term "AI/MI, inference function" or "ML inference function" at least in some examples refers to a (logical) function (or set of functions) that employs an ML model and/or AI decision entity to conduct inference. Additionally or alternatively, the term "AI/ML inference function" or "ML inference function" at least in some examples refers to an inference framework used to run a compiled model in the inference host. In some examples, an "AI/ML inference function" or "ML inference function" may also be referred to an "model inference engine", "ML inference engine", or "inference engine".

The term "machine learning workflow" or "ML workflow" at least in some examples refers to a process including data collection and preparation, AI/ML model building/generation; ML model training and testing; ML model deployment, ML model execution, ML model validation and/or verification; continuous, periodic and/or asynchronous ML model monitoring; ML model tuning, learning, and/or retraining. In some examples, the ML model monitoring includes self-monitoring or autonomous monitoring). In some examples, the ML model tuning, learning, and/or retraining includes self-tuning (or autonomous tuning), self-learning (or autonomous learning), and/or self-retraining (or autonomous retraining). The term "machine learning lifecycle" or "ML lifecycle" at least in some examples refers to process(es) of planning and/or managing the development, deployment, instantiation, and/or termination of an ML model and/or individual ML model components.

The term "matrix" at least in some examples refers to a rectangular array of numbers, symbols, or expressions, arranged in rows and columns, which may be used to represent an object or a property of such an object.

The terms "model parameter" and/or "parameter" in the context of ML, at least in some examples refer to values, characteristics, and/or properties that are learnt during training. Additionally or alternatively, "model parameter" and/or "parameter" in the context of ML, at least in some examples refer to a configuration variable that is internal to the model and whose value can be estimated from the given data. Model parameters are usually required by a model when making predictions, and their values define the skill of the model on a particular problem. Examples of such model parameters / parameters include weights (e.g., in an ANN); constraints; support vectors in a support vector machine (SVM); coefficients in a linear regression and/or logistic regression; word frequency, sentence length, noun or verb distribution per sentence, the number of specific character n-grams per word, lexical diversity, and the like, for natural language processing (NLP) and/or natural language understanding (NLU); and/or the like.

The terms "regression algorithm" and/or "regression analysis" in the context of ML at least in some examples refers to a set of statistical processes for estimating the relationships between a dependent variable (often referred to as the "outcome variable") and one or more independent variables (often referred to as "predictors", "covariates", or "features"). Examples of regression algorithms/models include logistic regression, linear regression, gradient descent (GD), stochastic GD (SGD), and the like.

The term "reinforcement learning" or "RL" at least in some examples refers to a goal-oriented learning technique based on interaction with an environment. In RL, an agent aims to optimize a long-term objective by interacting with the environment based on a trial and error process. Examples of RL algorithms include Markov decision process, Markov chain, Q-learning, multi-armed bandit learning, temporal difference learning, and deep RL. The term "multi-armed bandit problem", "K-armed bandit problem", "N-armed bandit problem", or "contextual bandit" at least in some examples refers to a problem in which a fixed limited set of resources must be allocated between competing (alternative) choices in a way that maximizes their expected gain, when each choice's properties are only partially known at the time of allocation, and may become better understood as time passes or by allocating resources to the choice. The term "contextual multi-armed bandit problem" or "contextual bandit" at least in some examples refers to a version of multi-armed bandit where, in each iteration, an agent has to choose between arms; before making the choice, the agent sees a d-dimensional feature vector (context vector) associated with a current iteration, the learner uses these context vectors along with the rewards of the arms played in the past to make the choice of the arm to play in the current iteration, and over time the learner's aim is to collect enough information about how the context vectors and rewards relate to each other, so that it can predict the next best arm to play by looking at the feature vectors.

The term "reward function", in the context of RL, at least in some examples refers to a function that outputs a reward value based on one or more reward variables; the reward value provides feedback for an RL policy so that an RL agent can learn a desirable behavior. The term "reward shaping", in the context of RL, at least in some examples refers to a adjusting or altering a reward function to output a positive reward for desirable behavior and a negative reward for undesirable behavior.

The term "supervised learning" at least in some examples refers to an ML technique that aims to learn a function or generate an ML model that produces an output given a labeled data set. Supervised learning algorithms build models from a set of data that contains both the inputs and the desired outputs. For example, supervised learning involves learning a function or model that maps an input to an output based on example input-output pairs or some other form of labeled training data including a set of training examples. Each input-output pair includes an input object (e.g., a vector) and a desired output object or value (referred to as a "supervisory signal"). Supervised learning can be grouped into classification algorithms, regression algorithms, and instance-based algorithms.

term "tensor" at least in some examples refers to an object or other data structure represented by an array of components that describe functions relevant to coordinates of a space. Additionally or alternatively, the term "tensor" at least in some examples refers to a generalization of vectors and matrices and/or may be understood to be a multidimensional array. Additionally or alternatively, the term "tensor" at least in some examples refers to an array of numbers arranged on a regular grid with a variable number of axes. At least in some examples, a tensor can be defined as a single point, a collection of isolated points, or a continuum of points in which elements of the tensor are functions of position, and the Tensor forms a "tensor field". At least in some examples, a vector may be considered as a one dimensional (1D) or first order tensor, and a matrix may be considered as a two dimensional (2D) or second order tensor. Tensor notation may be the same or similar as matrix notation with a capital letter representing the tensor and lowercase letters with subscript integers representing scalar values within the tensor.

The term "tuning" or "tune" at least in some examples refers to a process of adjusting model parameters or hyperparameters of an ML model in order to improve its performance. Additionally or alternatively, the term "tuning" or "tune" at least in some examples refers to a optimizing an ML model's model parameters and/or hyperparameters. In some examples, the particular model parameters and/or hyperparameters that are selected for adjustment, and the optimal values for the model parameters and/or hyperparameters vary depending on various aspects of the ML model, the training data, ML application and/or use cases, and/or other parameters, conditions, or criteria.

The term "unsupervised learning" at least in some examples refers to an ML technique that aims to learn a function to describe a hidden structure from unlabeled data. Unsupervised learning algorithms build models from a set of data that contains only inputs and no desired output labels. Unsupervised learning algorithms are used to find structure in the data, like grouping or clustering of data points. Examples of unsupervised learning are K-means clustering, principal component analysis (PCA), and topic modeling, among many others. The term "semi-supervised learning at least in some examples refers to ML algorithms that develop ML models from incomplete training data, where a portion of the sample input does not include labels.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

## Claims

1. A method for sharing load between sources of power in grid networks, the method comprising:
instantiating, by at least one processor, a dedicated load sharing instance for each respective bus of a grid topology network;
determining, by the at least one processor, that a first bus of the grid topology network is physically connected to an adjacent bus of the grid topology network at a higher level than the first bus;
receiving, by a first sub-level load sharing instance dedicated to the first bus, first branch power limits and first asset data for assets connected to the first bus;
sending, by the first sub-level load sharing instance, based on the first bus being physically connected to the adjacent bus, the first branch limits and first aggregated asset data, comprising at least the first asset data for the assets connected to the first bus, to an adjacent load sharing instance dedicated to the adjacent bus;
receiving, by the adjacent load sharing instance, the first branch limits, the first aggregated asset data, additional branch limits provided by at least one additional sub-level load sharing instance, and additional aggregated asset data provided by the at least one additional sub-level load sharing instance;
setting, by the adjacent load sharing instance, for at least the assets connected to the first bus and assets connected to the adjacent bus, based on sub-level branch limits comprising the first branch limits and the additional branch limits, a branch limit to be applied by the first sub-level load sharing instance and the at least one additional sub-level load sharing instance;
setting, by the adjacent load sharing instance, for at least the assets connected to the first bus and the assets connected to the adjacent bus, based on asset data comprising the first aggregated asset data and the additional aggregated asset data, a setpoint to be applied at the assets connected to the adjacent bus and by the first sub-level load sharing instance and the at least one additional sub-level load sharing instance;
sending, by the adjacent load sharing instance, a command indicative of the branch limit and the setpoint;
receiving, by the first sub-level load sharing instance, from the adjacent load sharing instance at the higher level, the command; and
applying, by the first sub-level load sharing instance, the branch limit and the setpoint to the at least one of the assets connected to the first bus.

2. The method of claim 1, further comprising:
receiving, by the adjacent load sharing instance at the higher level, second branch limits and second asset data for assets connected to a second bus of the grid network topology;
sending, by the adjacent load sharing instance at the higher level, the first branch limits, the additional branch limits, the second branch limits, the first aggregated asset data, the additional aggregated asset data, and second aggregated asset data comprising at least the second asset data, to a second adjacent load sharing instance dedicated to a second adjacent bus at a second higher level higher than the higher level in the grid network topology;
setting, by the second adjacent load sharing instance, for at least the assets connected to the first bus, assets connected to at least one additional bus, the assets connected to the adjacent bus, and assets connected to the second bus, based on second sub-level branch limits comprising the second branch limits, second a branch limit to be applied by a second sub-level load sharing instance dedicated to the second bus;
setting, by the second adjacent load sharing instance, for at least the assets connected to the first bus, assets connected to the at least one additional bus, the assets connected to the adjacent bus, and the assets connected to the second bus, based on the asset data and the second asset data, a second setpoint to be applied at the assets connected to the second adjacent bus and by the third sub-level load sharing instance;
receiving, by the adjacent load sharing instance at the higher level, a second command indicative of the second branch limit and the second setpoint; and
applying, by the adjacent load sharing instance at the higher level, the second branch limit and the second setpoint.

3. The method of claim 1, wherein the grid network topology defines points of interface (POIs), breaker states, and linkage between buses and load sharing instances, and wherein determining which load sharing instances are adjacent load sharing instances are based on the grid network topology.

4. The method of claim 1, further comprising:
identifying physical assets of the grid network topology;
identifying a priority for increasing power of the physical assets;
identifying a priority for decreasing power of the physical assets;
splitting dispatch ranges of each of the physical assets into a part-asset for increasing power and a part-asset for decreasing power;
collecting characteristics of each part-asset for increasing power and each part-asset for decreasing power; and
generating virtual part-assets by grouping part-assets by priority for increasing power and by priority for decreasing power,
wherein receiving the branch limits and the asset data is based on the grouping.

5. The method of claim 4, wherein the part-asset for increasing power is split based on a range from an initial dispatch power to a technical maximum power of a respective physical asset that is non-intermittent, and wherein the part-asset for decreasing power is split based on a range from a technical minimum dispatch power to the initial dispatch power of the respective physical asset that is non-intermittent.

6. The method of claim 4, further comprising:
assigning all intermittent assets of the physical assets as the priority for decreasing power.

7. The method of claim 1, further comprising:
determining that the grid network topology has changed;
freezing the setpoint until network sharing instances of the grid network topology have restarted and determined an updated setpoint for the grid network topology based on the change; and
applying the updated setpoint.

8. The method of claim 1, further comprising:
determining a local effective load based on an active power measurement of a branch link of the bus;
determining generation limits using load values based on second link limits in a user input;
comparing the generation limits to a capacity of the assets;
based on the comparing, updating the generation limits to the branch limit or constraining the generation limits to the capacity; and
sending, by the sub-level load sharing instance, the generation limits to the adjacent load sharing instance at the higher level,
wherein applying the link limit is based on the generation limits.

9. The method of claim 1, wherein the sub-level load sharing instance and the adjacent load sharing instance at the higher level are cloud-based instances, and wherein the instantiating occurs in a cloud network.

10. The method of claim 1, further comprising:
learning, using an artificial intelligence model, distributed power dispatches at respective points of control of the grid topology network;
learning, using the artificial intelligence model, relationships between the distributed power dispatches and at least one of communication between dedicated load sharing instances of the grid network topology, power load dynamics of the grid network topology, or intermittency of power supply in the grid network topology;
generating, using the artificial intelligence model, based on at least one of a power load distributed in the grid network topology, a generated power in the grid network topology, or a weather forecast, and based on the relationships, an updated setpoint and an updated branch limit for the grid network topology.

11. A system for sharing load between sources of power in grid networks , the system comprising:
a grid network topology comprising:
first processing circuitry configured to:
instantiate a dedicated load sharing instance for each respective bus of the grid topology network; and
determine that a first bus of the grid topology network is physically connected to an adjacent bus of the grid topology network at a higher level than the first bus;
second processing circuitry of a top-level load sharing instance dedicated to the adjacent bus and in communication with first assets connected to the first bus; and
third processing circuitry of a sub-level load sharing instance dedicated to a second bus of the grid topology network and in communication with second assets connected to the second bus, wherein the first bus and the second bus are adjacent level buses in the grid topology network,
wherein the third processing circuitry is configured to:
receive first branch power limits and asset data for the second assets;
send, based on the first bus being physically connected to the second bus, the first branch limits and the asset data to the top-level load sharing instance;
receive, from the top-level load sharing instance, a command indicative of a branch limit and a setpoint to be applied to at least one of the second assets; and
apply the branch limit and the setpoint to the at least one of the second assets, wherein the second processing circuitry is configured to:
receive the first branch limits, the first aggregated asset data, additional branch limits provided by at least one additional sub-level load sharing instance, and additional aggregated asset data provided by the at least one additional sub-level load sharing instance;
set, for at least the assets connected to the first bus and assets connected to the adjacent bus, based on sub-level branch limits comprising the first branch limits and the additional branch limits, a branch limit to be applied by the first sub-level load sharing instance and the at least one additional sub-level load sharing instance;
set, for at least the assets connected to the first bus and the assets connected to the adjacent bus, based on asset data comprising the first aggregated asset data and the additional aggregated asset data, a setpoint to be applied at the assets connected to the adjacent bus and by the first sub-level load sharing instance and the at least one additional sub-level load sharing instance; and
send the command.

12. The system of claim 11, further comprising fourth processing circuitry of a second sub-level load sharing instance dedicated to a third bus of the grid network topology and in communication with third assets connected to the third bus, wherein the third bus is at a level below the second bus in the grid network topology, and wherein the third processing circuitry is further configured to:
receive second branch limits and second asset data for third assets connected to the third bus; and
send, to the sub-level load sharing instance, the second branch limits and the second asset data.

13. The system of claim 11, wherein the grid network topology defines points of interface (POIs), breaker states, and linkage between buses and load sharing instances, and wherein determining which load sharing instances are adjacent load sharing instances are based on the grid network topology.

14. A computer-readable medium comprising instructions for sharing load between sources of power in grid networks that, when executed by processing circuitry cause the processing circuitry to:
instantiate a dedicated load sharing instance for each respective bus of a grid topology network;
determine that a first bus of the grid topology network is physically connected to an adjacent bus of the grid topology network at a higher level than the first bus;
receive, by a first sub-level load sharing instance of dedicated to the first bus, a grid network topology, link first branch power limits and first asset data for assets connected to a the first bus of the grid network topology;
send, by the first sub-level load sharing instance, based on the first bus being physically connected to the adjacent bus, the link first branch limits and the first aggregated asset data, comprising at least the first asset data for the assets connected to the first bus, to an adjacent load sharing instance dedicated to the adjacent bus at a higher level than the sub-level in the grid network topology ;
receive, by the adjacent load sharing instance, the first branch limits, the first aggregated asset data, additional branch limits provided by at least one additional sub-level load sharing instance, and additional aggregated asset data provided by the at least one additional sub-level load sharing instance ;
set, by the adjacent load sharing instance, for at least the assets connected to the first bus and assets connected to the adjacent bus, based on sub-level branch limits comprising the first branch limits and the additional branch limits, a branch limit to be applied by the first sub-level load sharing instance and the at least one additional sub-level load sharing instance;
set, by the adjacent load sharing instance, for at least the assets connected to the first bus and the assets connected to the adjacent bus, based on asset data comprising the first aggregated asset data and the additional aggregated asset data, a setpoint to be applied at the assets connected to the adjacent bus and by the first sub-level load sharing instance and the at least one additional sub-level load sharing instance;
send, by the adjacent load sharing instance, a command indicative of the branch limit and the setpoint;
receive, by the first sub-level load sharing instance, from the adjacent load sharing instance at the higher level, a the command indicative of a link limit and a setpoint to be applied to at least one of the assets connected to the bus; and
apply, by the first sub-level load sharing instance, the link branch limit and the setpoint to the at least one of the assets connected to the first bus.

15. The computer-readable medium of claim 14, wherein execution of the instructions further causes the processing circuitry to:
receive, by the adjacent load sharing instance at the higher level, second branch limits and second asset data for assets connected to a second bus of the grid network topology;
send, by the adjacent load sharing instance at the higher level, the first branch limits, the additional branch limits, the second branch limits, the first aggregated asset data, the additional aggregated asset data, and second aggregated asset data comprising at least the second asset data, to a second adjacent load sharing instance dedicated to a second adjacent bus at a second higher level higher than the higher level in the grid network topology;
set, by the second adjacent load sharing instance, for at least the assets connected to the first bus, assets connected to at least one additional bus, the assets connected to the adjacent bus, and assets connected to the second bus, based on second sub-level branch limits comprising the second branch limits, second a branch limit to be applied by a second sub-level load sharing instance dedicated to the second bus;
set, by the second adjacent load sharing instance, for at least the assets connected to the first bus, assets connected to the at least one additional bus, the assets connected to the adjacent bus, and the assets connected to the second bus, based on the asset data and the second asset data, a second setpoint to be applied at the assets connected to the second adjacent bus and by the third sub-level load sharing instance;
receive, by the adjacent load sharing instance at the higher level, a second command indicative of the second branch limit and the second setpoint; and
apply, by the adjacent load sharing instance at the higher level, the second branch limit and the second setpoint.
